# EUROPEAN PATENT APPLICATION

(11) **EP 1 396 922 A2**
(43) Date of publication of application: **10.03.2004**
(21) Application number: 03016111.1
(22) Date of filing: 16.07.2003
(51) Int. Cl.: H02K 9/06

(54) **Reluctance motor**

(30) Priority: 08.08.2002 DE 10236362
(71) Applicant: Vorwerk & Co. Interholding GmbH, 42275 Wuppertal (DE)
(72) Inventor: Caldewey, Uwe, 44229 Dortmund (DE)
(74) Representative: Müller, Enno, Dipl.-Ing.

(57) **Zusammenfassung**

Die Erfindung betrifft einen Reluktanzmotor (2) mit einem Rotor und einem Stator (13), wobei der Rotor eine Motorwelle (14) aufweist und mit der Motorwelle (14) ein Lüfterrad (1) drehfest verbunden ist, wobei weiter das Lüfterrad (1) radial verlaufende Lüfterlamellen (6) aufweist und über eine Abdeckung (9), die sich über einen Teil seines Grundrisses erstreckt. Um einen Reluktanzmotor der in Rede stehenden Art insbesondere hinsichtlich der Motorlüftung verbessert auszugestalten, wird vorgeschlagen, das axiale Stirnflächen (7) der Lüfterlamellen (6) radial innen der kreisringförmigen Abdeckung (9) freiliegen.

## Description

Die Erfindung betrifft einen Reluktanzmotor mit einem Rotor und einem Stator, wobei der Rotor eine Motorwelle aufweist und mit der Motorwelle ein Lüferrad drehfest verbunden ist, wobei weiter das Lüfterrad radial verlaufende Lüfterlamellen aufweist und über eine Abdeckung, die sich über einen Teil seines Grundrisses erstreckt.

Reluktanzmotoren der in Rede stehenden Art sind bekannt. Diese weisen im Allgemeinen ein über den Rotor des Motors mitgetriebenes Lüfterrad zur Belüftung, insbesondere in axialer Richtung des Reluktanzmotors auf.

Im Hinblick auf den zuvor beschriebenen Stand der Technik wird eine technische Problematik der Erfindung darin gesehen, einen Reluktanzmotor der in Rede stehenden Art insbesondere hinsichtlich der Motorbelüftung verbessert auszugestalten.

Diese Problematik ist zunächst und im Wesentlichen durch den Gegenstand des Anspruches 1 gelöst, wobei darauf abgestellt ist, dass axiale Stirnflächen der Lüfterlamellen radial innen der kreisringförmigen Abdeckung freiliegen. Zufolge dieser erfindungsgemäßen Ausgestaltung ist eine bessere Belüftung, insbesondere eine verbesserte Luft-Durchdrückung des Rekuktanzmotors erreicht. Die kreisringförmige Abdeckung ist hierbei so bemessen, dass sich diese in einer Projektion auf den Stator außerhalb einer Stator-Außenkreislinie erstreckt und somit den zwischen Stator und einem Motorgehäuse verbleibenden und der Belüftung des Motors dienenden Ringspalt in Richtung auf die Ansaugseite des Lüfterrades überdeckt. Hierdurch wird die zwischen den Lüfterlamellen radial nach außen gedrängte Kühlluft in Axialrichtung zum Stator hin geleitet. In einer bevorzugten Ausgestaltung sind die Lüfterlamellen in Richtung der Rotorachse ausgerichtet und stehen hierbei bevorzugt senkrecht zur Ebene der kreisringförmigen Abdeckung. Die Lüfterlamellen erstrecken sich bis zu einem inneren Rand der Abdeckung, wobei auch bevorzugt die Zwischenräume zwischen zwei Lüfterlamellen nach außen freiliegen. Alle Lüfterlamellen sind bevorzugt gleich ausgebildet und mit einem gleichmäßigen Abstand zueinander in radialer Richtung angeordnet, wobei weiter bevorzugt wird, das die Lüfterlamellen rotorseitig auf einer geschlossenen Scheibe aufsitzen. Diese geschlossene Scheibe ist auf der der Ansaugseite, d.h. auf der den nach außen freiliegenden Zwischenräumen zwischen den Lüfterlammelen gegenüberliegenden Seite angeordnet. Die kreisringförmige Abdeckung hingegen ist den der geschlossenen Scheibe abgewandten Endbereichen der Lüfterlamellen zugeordnet. Hierbei ist weiter vorgesehen, dass radiale Stirnenden der Lüfterlamellen die radial äußere, kreisringförmige Abdeckung tragen. Bevorzugt sind die geschlossene Scheibe, die Lüfterlamellen und die kreisringförmige Abdeckung einteilig ausgebildet, bevorzugt aus einem Kunststoffmaterial, weiter bevorzugt hergestellt im Kunststoffspritzverfahren. Die Anordnung ist weiter so gewählt, dass die kreisringförmige Abdeckung sich in einer Projektion radial außerhalb der geschlossenen Scheibe erstreckt. Bevorzugt sind die radial außen freistehenden Stirnflächen der Lüfterlamellen axial ausgerichtet, so dass diese Stirnflächen auf der kreislinienförmigen Randkante der geschlossenen Scheibe fluchten. Eine Lüfterlamelle kann über ihre gesamte Radialerstreckung eine gleichmäßige, in Axialrichtung gemessene Höhe aufweisen. Denkbar ist jedoch auch eine Ausgestaltung, bei welcher eine Lüfterlamelle im Bereich der Anbindung an die kreisringförmige Abdeckung eine größere axiale Erstreckung aufweist als im Bereich ihres radial inneren Endes. So kann eine Lüfterlamelle gleichmäβig von der Anbindung an die kreisringförmige Abdeckung ausgehend in Richtung auf die Motorwelle abfallen. Es ist jedoch auch eine stufenartige Minderung der Lamellenhöhe denkbar. Bevorzugt wird eine Ausgestaltung, bei welcher eine Lüfterlamelle radial innen mit Abstand zu der Motorwelle endet, wobei weiter eine Lüfterlamelle radial innen eine freistehende axiale Stirnfläche ausbildet. Auch erweist es sich als vorteilhaft, dass eine radial Erstreckung einer Lüfterlamelle einer radialen Erstreckung der kreisringförmigen Abdeckung entspricht oder zumindest annähernd entspricht. Schließlich ist vorgesehen, dass die axiale Höhe des Lüfterrades im radial mittigen Bereich einer Lüfterlamelle etwa dem 0,5- bis 1,5-fachen der radialen Abmessung der kreisringförmigen Abdeckung entspricht, wobei jeder Zehntel-Betrag als auch jeder Hundertstel-Betrag zwischen 0,5 und 1,5 im Sinne der Erfindung dem Verhältnis entsprechen kann.

Nachstehend ist die Erfindung anhand der beigefügten Zeichnung, welche lediglich zwei Ausführungsbeispiele darstellt, näher erläutert. Es zeigt:
- Fig. 1: das erfindungsgemäße Lüfterrad in Seitenansicht;
- Fig. 2: die klappfigürliche Draufsicht zu Fig. 1;
- Fig. 3: den Schnitt gemäß der Linie III-III in Fig. 2;
- Fig. 4: eine perspektivische Vorderansicht des Lüfterrades;
- Fig. 5: eine perspektivische Rückansicht des Lüfterrades;
- Fig. 6: eine perspektivische Rückansicht bei Anordnung des Lüfterrades an einen Reluktanzmotor;
- Fig. 7: eine Darstellung gemäß Fig. 6, jedoch die Vorderansicht betreffend.

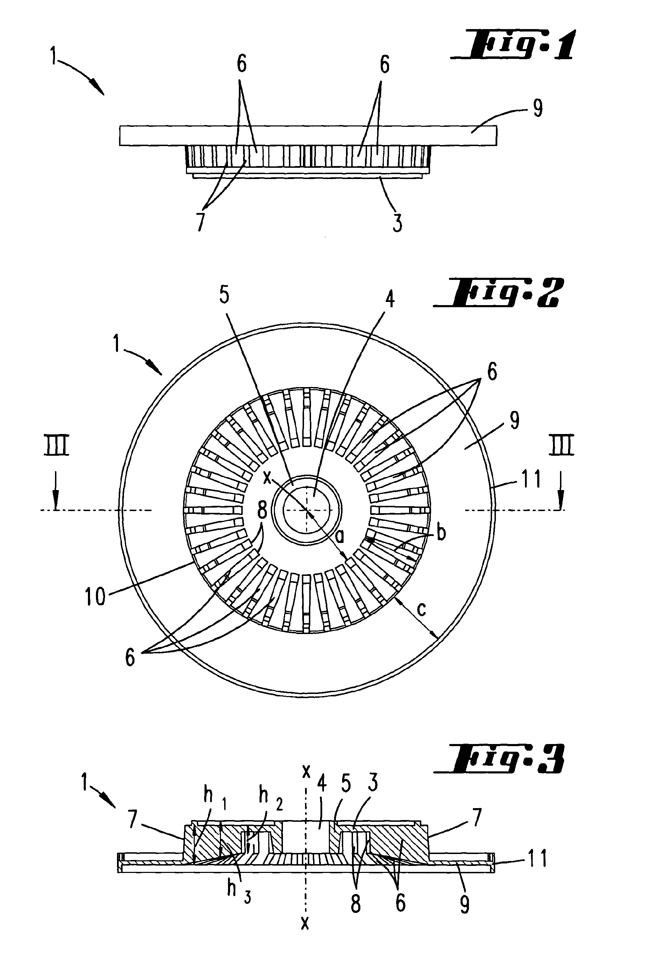

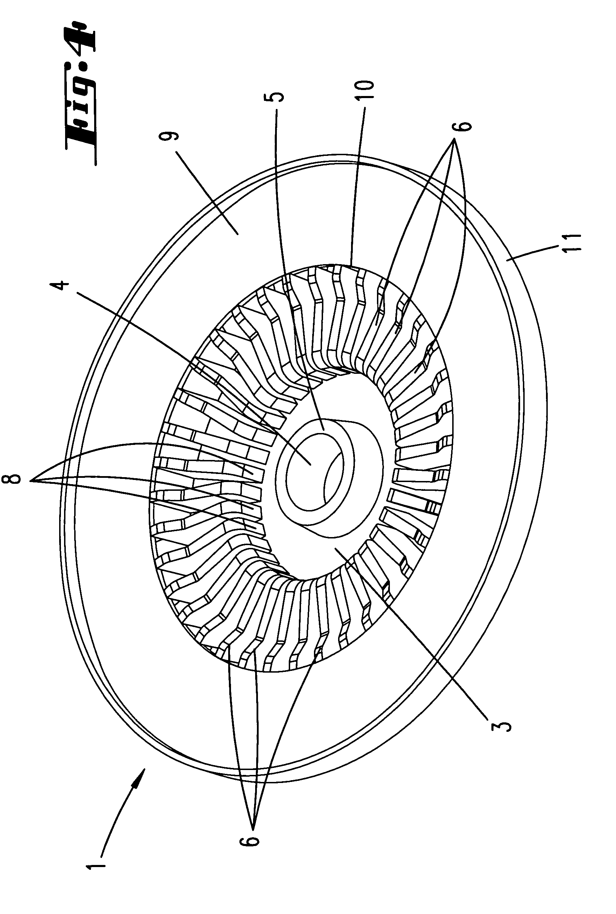

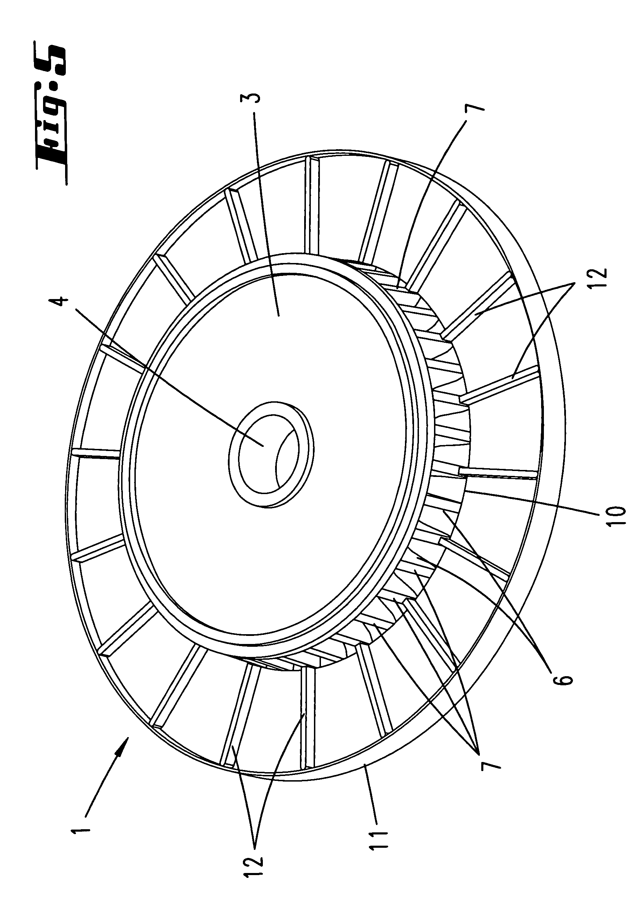

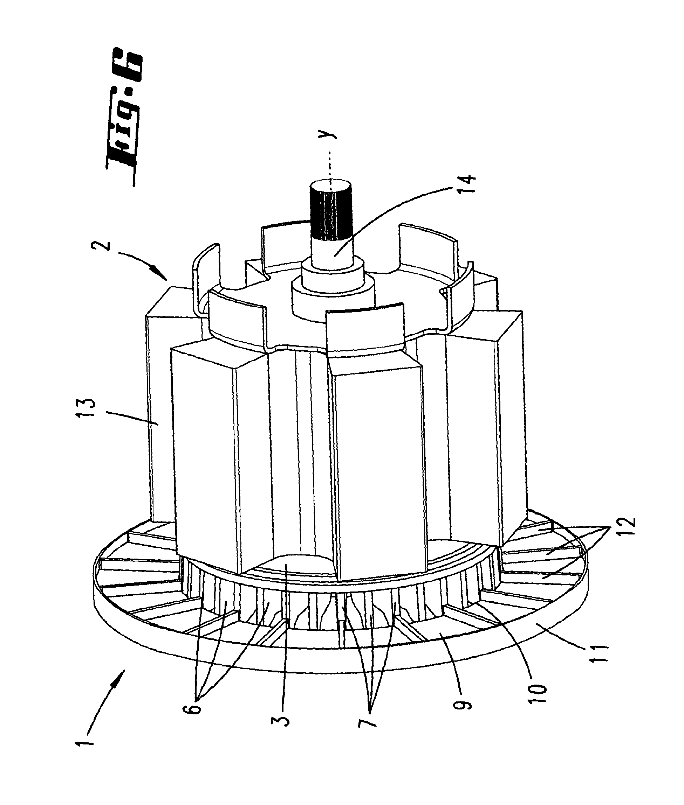

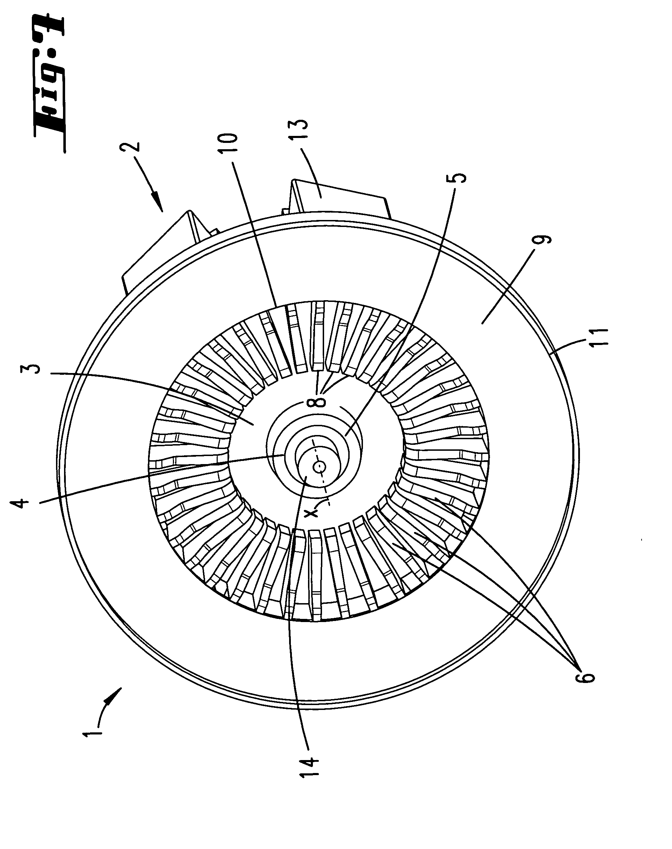

Dargestellt und beschrieben ist zunächst mit Bezug zu den Figuren 1 bis 3 ein Lüfterrad 1 zur Anordnung an einem Reluktanzmotor 2 (vgl. Figuren 6 und 7).

Das Lüfterrad 1 ist einteilig ausgebildet und besteht bevorzugt aus Kunststoff, weiter bevorzugt hergestellt im Kunststoffspritzverfahren. Es ist zunächst eine zentrale geschlossene Scheibe 3 vorgesehen, mit einer mittigen, eine Motorwellen-Durchstecköffnung 4 aufweisenden Nabe 5.

Auf der geschlossenen Scheibe 3 sind radial verlaufende, winkelmäßig gleichmäßig zueinander beabstandete Lüfterlamellen 6 angeordnet, welche in Richtung auf die Lüfterrad-Mittelachse x und nach Aufsetzen auf die Motorwelle 14 des Reluktanzmotors 2 in Richtung auf die Rotorachse y ausgerichtet sind. Demzufolge stehen die Lüfterlamellen 6 senkrecht auf der Scheibe 3, dies bei streng radialer Ausrichtung der Lamellen.

Die Anordnung ist weiter so gewählt, dass die Lüfterlamellen 6 radial außen jeweils eine freistehende axiale Stirnfläche 7 ausbilden, welche Stirnflächen 7 mit der kreisförmigen Schmalrandkante der geschlossenen Scheibe 3 fluchten. Ausgehend von diesen Stirnflächen 7 erstrecken sich die Lüfterlamellen 6 in Richtung auf die Radachse x und enden mit Abstand zu der Nabe 5. In dem dargestellten Ausführungsbeispiel entspricht der Abstand a zwischen jedem radial inneren Ende einer Lüfterlamelle 6 und der Radachse x etwa der radial Länge b der Lüfterlamelle 6.

An ihren radial inneren Enden bilden die Lüfterlamellen 6 gleichfalls eine freistehende Stirnfläche 8 aus, deren axiale Höhe h₂ in dem dargestellten Ausführungsbeispiel etwa dem 0,6- bis 0,65-fachen der axialen Höhe h₁ im Bereich der äußeren Stirnflächen 7 entspricht. Demzufolge fällt die axial äußere Randkante einer jeden Lüfterlamelle 6 in Richtung auf die Radachse x ab, wobei diese Neigung gleichmäßig ist. Es ist jedoch auch ein stufenförmiger Verlauf denkbar.

Die Zwischenräume zwischen den Lüfterlamellen 6 sind in die von der Scheibe 3 abweisende Richtung freiliegend. Desgleichen liegen auch die axialen äußeren Stirnflächen 7 der Lüfterlamellen 6 frei, wobei in diesem Bereich die der Scheibe 3 abgewandten Stirnenden der Lüfterlamellen 6 eine kreisringförmige Abdekkung 9 tragen. Entsprechend ist diese kreisringförmige Abdeckung 9 um das Maß h₁ der Lüfterlamellen 6 im Bereich deren äußeren Stirnflächen 7 ebenenversetzt zu der Scheibe 3 angeordnet.

Die Anbindung der Abdeckung 9 an die Lüfterlamellen 6 erfolgt am inneren Rand 10 der Abdeckung 9, wobei die kreisringförmige Abdeckung 9 sich in einer Projektion radial außerhalb der geschlossenen Scheibe 3 erstreckt.

Die radiale Erstreckung c der kreisringförmigen Abdeckung 9 entspricht etwa der radialen Erstreckung b einer Lüfterlamelle 6. Des Weiteren entspricht die axiale Höhe h₃ des Lüfterrades 1 im radial mittigen Bereich einer Lüfterlamelle 6 etwa dem 0,7-fachen der radialen Abmessung c der kreisringförmigen Abdekkung 9.

Die Abdeckung 9 besitzt des Weiteren einen entlang des äußeren Randes umlaufenden, sowohl zur Ober- als auch zur Unterseite ragenden Kragen 11. Zwischen diesem Kragen 11 und dem inneren Rand 10 erstrecken sich an der Unterseite der Abdeckung 9, d.h. auf der in Richtung auf die geschlossene Scheibe 3 weisenden Seite, mehrere gleichmäßig zueinander beabstandete und radial ausgerichtete Rippen 12.

Die Anordnung des Lüfterrades 1 an den Reluktanzmotor 2 ist in den Figuren 6 und 7 dargestellt. Dieser Reluktanzmotor 2 setzt sich im Wesentlichen aus einem nicht veranschaulichten Rotor und einem Stator 13 zusammen, wobei der Rotor eine Motorwelle 14 aufweist. Mit der Motorwelle 14 ist das Lüfterrad 1 drehfest verbunden, wobei letzteres sich unmittelbar im Anschluß an der Stator 13 erstreckt.

Die nach außen freiliegenden Zwischenräume zwischen den Lüfterlamellen 6 weisen in die, dem Stator 13 abgewandte Richtung. Die geschlossene Scheibe 3 ist mit geringem Abstand zum Stator 13 positioniert. Bei Drehung der Motorwelle 14 wird Kühlluft durch die Zwischenräume zwischen den Lüfterlamellen 6 angesaugt und radial nach außen unter der kreisringförmigen Abdeckung 9 in den zwischen dem Stator 13 und einen nicht dargestellten, im Motorgehäuse verbleibenden Ringraum gedrückt. Die kreisringförmige Abdeckung 9 unterstützt diese Luft-Durchdrückung durch Überdecken des dem Lufttransport dienenden Ringraumes.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Reluktanzmotor (2) mit einem Rotor und einem Stator (13), wobei der Rotor eine Motorwelle (14) aufweist und mit der Motorwelle (14) ein Lüfterrad (1) drehfest verbunden ist, wobei weiter das Lüfterrad (1) radial verlaufende Lüfterlamellen (6) aufweist und über eine Abdeckung (9), die sich über einen Teil seines Grundrisses erstreckt, **dadurch gekennzeichnet, dass** axiale Stirnflächen (7) der Lüfterlamellen (6) radial innen der kreisringförmigen Abdekkung (9) freiliegen.

2. Reluktanzmotor nach Anspruch 1 oder insbesondere danach, **dadurch gekennzeichnet, dass** die Lüfterlamellen (6) in Richtung der Rotorachse (y) ausgerichtet sind.

3. Reluktanzmotor nach einem oder mehreren der vorhergehenden Ansprüche oder insbesondere danach, **dadurch gekennzeichnet, dass** die Lüfterlamellen (6) sich bis zu einem inneren Rand (10) der Abdeckung (9) erstrecken.

4. Reluktanzmotor nach einem oder mehreren der vorhergehenden Ansprüche oder insbesondere danach, **dadurch gekennzeichnet, dass** auch die Zwischenräume zwischen zwei Lüfterlamellen (6) nach außen freiliegen.

5. Reluktanzmotor nach einem oder mehreren der vorhergehenden Ansprüche oder insbesondere danach, **dadurch gekennzeichnet, dass** die Lüfterlamellen (6) rotorseitig auf einer geschlossenen Scheibe (3) aufsitzen.

6. Reluktanzmotor nach einem oder mehreren der vorhergehenden Ansprüche oder insbesondere danach, **dadurch gekennzeichnet, dass** radiale Stirnenden der Lüfterlamellen (6) die radial äußere, kreisringförmige Abdeckung (9) tragen.

7. Reluktanzmotor nach einem oder mehreren der vorhergehenden Ansprüche oder insbesondere danach, **dadurch gekennzeichnet, dass** die kreisringförmige Abdeckung (9) sich in einer Projektion radial außerhalb der geschlossenen Scheibe (3) erstreckt.

8. Reluktanzmotor nach einem oder mehreren der vorhergehenden Ansprüche oder insbesondere danach, **dadurch gekennzeichnet, dass** eine Lüfterlamelle (6) im Bereich der Anbindung an die kreisringförmige Abdeckung (9) eine größere axiale Erstreckung (h₁) aufweist als im Bereich ihres radial inneren Endes.

9. Reluktanzmotor nach einem oder mehreren der vorhergehenden Ansprüche oder insbesondere danach, **dadurch gekennzeichnet, dass** eine Lüfterlamelle (6) radial innen mit Abstand (a) zu der Motorwelle (14) endet.

10. Reluktanzmotor nach einem oder mehreren der vorhergehenden Ansprüche oder insbesondere danach, **dadurch gekennzeichnet, dass** eine Lüfterlamelle (6) radial innen eine freistehende axiale Stirnfläche (8) ausbildet.

11. Reluktanzmotor nach einem oder mehreren der vorhergehenden Ansprüche oder insbesondere danach, **dadurch gekennzeichnet, dass** eine radiale Erstreckung (b) einer Lüfterlamelle einer radialen Erstreckung (c) der kreisringförmigen Abdeckung (9) entspricht.

12. Reluktanzmotor nach einem oder mehreren der vorhergehenden Ansprüche oder insbesondere danach, **dadurch gekennzeichnet, dass** die axiale Höhe (h₃) des Lüfterrades (1) im radial mittigen Bereich einer Lüfterlamelle (6) etwa dem 0,5- bis 1,5-fachen der radialen Abmessung (c) der kreisringförmigen Abdeckung (9) entspricht.
